# EUROPEAN PATENT APPLICATION

(11) **EP 3 349 080 A1**
(43) Date of publication of application: **18.07.2018**
(21) Application number: 16843532.9
(22) Date of filing: 22.07.2016
(51) Int. Cl.: G05B 19/042

(54) **ROBOT OPERATING STATE SWITCHING METHOD AND SYSTEM**

(30) Priority: 10.09.2015 CN 201510574426
(71) Applicant: Beijing Evolver Robotics Co., Ltd, Beijing 100190 (CN)
(72) Inventor: XU, Qingyun, Beijing 100190 (CN); WEI, Ran, Beijing 100190 (CN); WANG, Wei, Beijing 100190 (CN); MENG, Fandong, Beijing 100190 (CN); LI, Jianhui, Beijing 100190 (CN); HOU, Jinwen, Beijing 100190 (CN); QIAO, Tao, Beijing 100190 (CN)
(74) Representative: Casalonga
(86) International application number: PCT/CN2016/091032
(87) International publication number: WO 2017/041594

(57) **Abstract**

The present invention discloses a method and system for switching an operating state of a robot. The method comprises the following steps of: providing an excitation device for an opening terminal and an excitation device for a closing terminal on a mask of the robot; transmitting, by the excitation device, a mask state signal to a slave computer processor when the mask is opened or closed; by the slave computer processor, processing the received mask state signal and then transmitting the processed mask state signal to a master computer processor; and controlling, by the master computer processor, the switchover of the operating state of the robot according to the received processed mask state signal. With regard to the technical solutions of the present invention, through the opening and closing of a mask, the system of a robot can be in two operating states and perform different functions. In this way, the integration level and operating efficiency of the robot are improved, and the manufacturing cost thereof is reduced.

## Description

This application claims priority to Chinese Patent Application No. 201510574426.2, filed 10 September 2015, the contents of which are hereby incorporated by reference in their entirety.

### TECHNICAL FIELD

The present invention relates to the technical field of robots, and in particular to a method and system for switching an operating state of a robot.

### BACKGROUND OF THE PRESENT INVENTION

Robots are machine devices which perform operations automatically. A robot can receive human instructions, can operate pre-formatted programs, and can also operate according to principles established by artificial intelligence technologies. Its task is to help or replace human workers in their work, for example, work in the manufacturing industry, construction industry or work that is dangerous.

A robot generally includes a detection device and a control system. The detection device detects the motion and operation of a robot on a real time basis, and feeds the motion and operation back to the control system as desired. Upon comparison with the setup information, an actuation mechanism is adjusted to ensure that the action of the robot meets intended requirements. Sensors, serving as detection devices, can be approximately divided into two kinds. One kind is internal information sensors configured to detect internal conditions in various parts of the robot, for example, the position of joints, velocity, acceleration, etc., and transmit the detected information to a controller as a feedback signal, thus forming a closed-loop control. The other kind is external information sensors configured to obtain information about operating objects of a robot and external environment so that the action of the robot can be adapted to change in the external world. This enables a higher level of automation of the robot, and even allows the robot to have a certain "feel". In this way, the robot tends to be intelligent. For example, external sensors such as a visual sensor or an acoustic sensor provide information about the operating objects and operating environment, and a big feedback loop is thus formed with such information. As a result, the operating precision of robots is highly improved.

With regard to control systems, one kind is the centralized control. That is, a robot is totally controlled by one microcomputer. The other kind is the decentralized (staged) control. That is, a robot is controlled by a plurality of microcomputers. For example, when a robot is controlled by a master microcomputer and a slave microcomputer together, the master computer is usually responsible for the management, communication, of kinematic and dynamic computation of the system and for transmitting instruction information to the slave microcomputer. As a slave computer, each joint respectively corresponds to a CPU for interpolation operation and servo control so as to achieve the given motion. Besides, the slave computer feeds back information to the master computer. According to difference in requirements on operating tasks, the ways to control robots can be divided into point-to-point control, continuous path control and force (torque) control.

In recent years, with the development of robot technologies, there are generally two display screens in common advanced robots. The screen on the head displays various expressions, and the other screen on the chest displays an operating interface. In this way, the cost for display screens is greatly increased and the control system also becomes more complicated.

### SUMMARY OF THE PRESENT INVENTION

The present invention provides a method and system for switching an operating state of a robot. As a result, the problems mentioned above can be solved, the integration level and operating efficiency of the robot can be improved, and the manufacturing cost thereof can be reduced.

The present invention provides a method for switching an operating state of a robot, including the following steps of:
providing an excitation device for an opening terminal and an excitation device for a closing terminal on a mask of the robot;
transmitting, by the excitation device, a mask state signal to a slave computer processor when the mask is opened or closed;
by the slave computer processor, processing the received mask state signal and then transmitting the processed mask state signal to a master computer processor; and
controlling, by the master computer processor, the switchover of the operating state of the robot according to the received processed mask state signal.

Further, when the mask is opened, a low level is generated by triggering the excitation device for the opening terminal and transmitted to the slave computer processor;
the slave computer processor feeds back a signal to the master computer processor; and
the master computer processor receives the signal, and controls the robot to enter a touch-based operating state.

Further, when the mask is closed, a low level is generated by triggering the excitation device for the closing terminal and transmitted to the slave computer processor;
the slave computer processor feeds back a signal to the master computer processor; and
the master computer processor receives the signal, and controls the robot to enter an independent operating state.

Further, by the slave computer processor, processing the received mask state signal and then transmitting the processed mask state signal to a master computer processor further includes the following steps of:
performing, by the slave computer processor, filtering and de-noising upon receiving the mask state signal; and
transmitting, by the slave computer processor, the processed mask state signal to the master computer processor by serial communication.

Further, the method also includes the following steps of:
generating a high level by triggering the excitation device for the opening terminal or the excitation device for the closing terminal,, and transmitting the high level to the slave computer processor, when the mask is in a half-open and half-closed state;
transmitting, by the slave computer processor, the received signal to the master computer processor; and
by the master computer processor, receiving the signal, determining that an opening fault occurs in the mask, and giving a warning.

Further, the excitation device includes a micro switch, a Hall switch or an infrared reflecting switch.

Further, when the robot is in a touch-based operating state, the master computer processor feeds back a voice prompt indicating that the mask has been opened, starts the control to a master computer touch screen, activates a proximal touch operation of the master computer touch screen, turns on and controls a purifier by the master computer touch screen, turns on and controls household appliances by the master computer touch screen, turns on and controls a projector by the master computer touch screen, and starts a video chat by a camera in the master computer.

Further, when the robot is in an independent operating state, the master computer processor feeds back a voice prompt indicating that the mask has been closed, and starts terminal control, turns on remote control, monitoring and/or voice control, controls the motion of the robot by a phone APP, controls a purifier by the mobile APP, controls household appliances by the mobile APP, performs monitoring by the mobile APP, controls the motion of the robot by voice, starts a chat with the robot by voice, shows various facial expressions of the robot by a touch screen, and matches the various facial expressions with body actions.

The technical solutions of the present invention further provide a system for switching an operating state of a robot, including a mask, an excitation device for an opening terminal, an excitation device for a closing terminal, a master computer processor and a slave computer processor, wherein
the mask is configured to trigger the excitation device for the opening terminal or the excitation terminal for the closing terminal to generate a low level;
the excitation device for the opening terminal is configured to generate a low level, when the mask has been opened, and transmit the low level to the slave computer processor;
the excitation device for the closing terminal is configured to generate a low level, when the mask has been closed, and transmit the low level to the slave computer processor;
the slave computer processor is configured to receive the low level generated by the excitation device for the opening terminal or the excitation device for the closing terminal, and perform filtering and de-noising, transmit the low level to the master computer processor; and
the master computer processor is configured to control the switchover of the operating state of the robot according to the low level generated by the excitation device for the opening terminal or the excitation device for the closing terminal.

Further, the excitation device for the opening terminal or the excitation device for the closing terminal includes a micro switch, a Hall switch or an infrared reflecting switch.

With regard to the technical solutions of the present invention, through the opening and closing of a mask, the system of a robot can be in two operating states and perform different functions. In this way, the integration level and operating efficiency of the robot are improved, and the manufacturing cost thereof is reduced.

Other features and advantages of the present invention will be explained and become apparent from the description below, or will be well learned from the practice of the present invention. The purposes and other advantages of the present invention can be achieved and obtained by structures particularly shown in the description, claims and the accompanying drawings.

The technical solutions of the present invention will be further described in detail with reference to the drawings and embodiments.

### BRIEF DESCRIPTION OF THE DRAWINGS

The drawings are used to provide further understanding of the present invention and constitute a part of the specification. The drawings are used for explaining the present invention together with following specific embodiments and not intended to limit the present invention. In the drawings:
Fig. 1 is a flowchart of switching an operating state of a robot according to embodiments of the present invention; and
Fig. 2 is a schematic structure diagram of a system for switching an operating state of a robot according to embodiments of the present invention.

### DETAILED DESCRIPTION OF THE PRESENT INVENTION

The preferred embodiments of the present invention will be described with reference to the drawings. It should be understood that the preferred embodiments described herein are merely used to describe and explain but not to limit the present invention.

The main concept of technical solutions of the present invention is to trigger, through the closing and opening of a mask, a robot to switch between two different operating states so as to perform different functions.

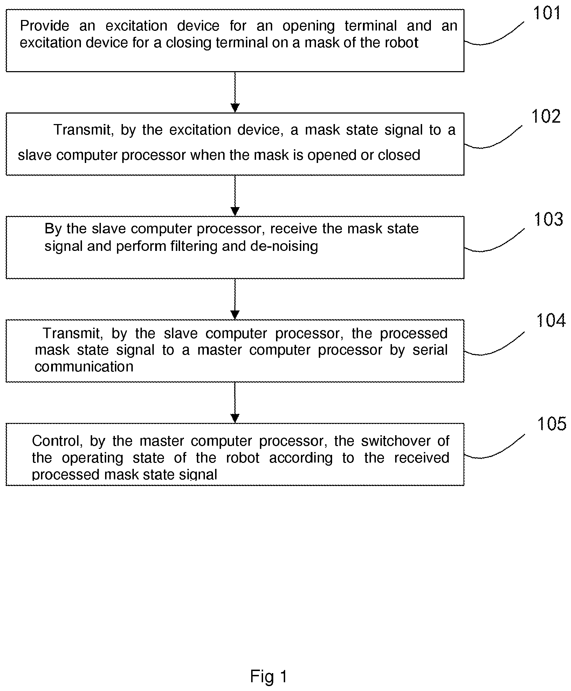

Fig. 1 is a flowchart of switching an operating state of a robot according to embodiments of the present invention. As shown in Fig. 1, the flow for switching an operating state of the robot includes the following steps.

Step 101: An excitation device for an opening terminal and an excitation device for a closing terminal are provided on a mask of the robot, the two excitation devices being communicated with the mask of the robot. The excitation device can be a micro switch, a Hall switch or an infrared reflecting switch.

Step 102: The excitation device transmits a mask state signal to a slave computer processor when the mask is opened or closed.

When the mask is opened, a low level is generated by triggering the excitation device for the opening terminal and transmitted to the slave computer processor.

When the mask is closed, a low level is generated by triggering the excitation device for the closing terminal and transmitted to the slave computer processor.

Step 103: The slave computer processor receives the mask state signal, for example, a low level generated by the excitation device for the opening terminal or by the excitation device for the closing terminal, and performs filtering and de-noising on the signal.

Step 104: The slave computer processor transmits the processed mask state signal to the master computer processor by serial communication.

Step 105: The master computer processor controls the switchover of the operating state of the robot according to the received processed mask state signal.

If the low level is generated by the excitation device for the opening terminal, the master computer processor controls the robot to enter a touch-based operating state.

When the robot is in the touch-based operating state, the master computer processor feeds back a voice prompt indicating that the mask has been opened, starts the control to a master computer touch screen, activates a proximal touch operation of the master computer touch screen, turns on and controls a purifier by the master computer touch screen, turns on and controls household appliances by the master computer touch screen, turns on and controls a projector by the master computer touch screen, and starts a video chat by a camera in the master computer.

If the low level is generated by the excitation device for the closing terminal, the master computer processor controls the robot to enter an independent operating state.

When the robot is in the independent operating state, the master computer processor feeds back a voice prompt indicating that the mask has been closed, and starts terminal control, turns on remote control, monitoring and/or voice control, controls the motion of the robot by a phone APP, controls a purifier by the mobile APP, controls household appliances by the mobile APP, performs monitoring by the mobile APP, controls the motion of the robot by voice, starts a chat with the robot by voice, shows various facial expressions of the robot by a touch screen, and matches the various facial expressions with body actions.

When the mask is in a half-open and half-closed state, a high level is generated by triggering the excitation device for the opening terminal or the excitation device for the closing terminal and the high level is transmitted to the slave computer processor. The slave computer processor transmits the received signal to the master computer processor. The master computer processor receives the signal, determines that an opening fault occurs in the mask, and gives a warning.

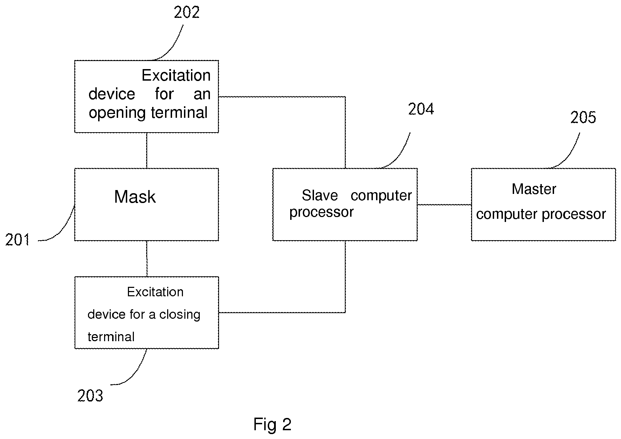

To achieve the flow mentioned above, the embodiments of the present invention further provide a system for switching an operating state of a robot. Fig. 2 is a schematic structure diagram of a system for switching an operating state of a robot according to embodiments of the present invention. As shown in Fig. 2, the system for switching an operating state of a robot includes a mask 201, an excitation device for an opening terminal 202, an excitation device for a closing terminal 203, a master computer processor 204 and a slave computer processor 205, wherein the excitation device for the opening terminal or the excitation device for the closing terminal can be a micro switch, a Hall switch or an infrared reflecting switch.

The excitation device for the opening terminal and the excitation device for the closing terminal will be triggered by the opening or closing of the mask to generate a low level. When the mask is opened, a low level is generated by the excitation device for the opening terminal and transmitted to the slave computer processor; and when the mask is closed, a low level is generated by the excitation device for the closing terminal and transmitted to the slave computer processor.

The slave computer processor receives the low level generated by the excitation device for the opening terminal or the excitation device for the closing terminal, performs filtering and de-noising, and transmits the low level to the master computer processor.

The master computer processor controls the switchover of the operating state of the robot according to the low level generated by the excitation device for the opening terminal or the excitation device for the closing terminal.

If the low level is generated by the excitation device for the opening terminal, the master computer processor controls the robot to enter a touch-based operating state.

When the robot is in the touch-based operating state, the master computer processor feeds back a voice prompt indicating that the mask has been opened, starts the control to a master computer touch screen, activates a proximal touch operation of the master computer touch screen, turns on and controls a purifier by the master computer touch screen, turns on and controls household appliances by the master computer touch screen, turns on and controls a projector by the master computer touch screen, and starts a video chat by a camera in the master computer.

If the low level is generated by the excitation device for the closing terminal, the master computer processor controls the robot to enter an independent operating state.

When the robot is in the independent operating state, the master computer processor feeds back a voice prompt indicating that the mask has been closed, and starts terminal control, turns on remote control, monitoring and/or voice control, controls the motion of the robot by a phone APP, controls a purifier by the mobile APP, controls household appliances by the mobile APP, performs monitoring by the mobile APP, controls the motion of the robot by voice, starts a chat with the robot by voice, shows various facial expressions of the robot by a touch screen, and matches the various facial expressions with body actions.

With regard to the above embodiments of the present invention, through the opening and closing of a mask, the system of a robot can be in two operating states and perform different functions. In this way, the integration level and operating efficiency of the robot are improved, and the manufacturing cost thereof is reduced.

It should be understood by a person skilled in the art that embodiments of the present invention can be provided as methods, systems or computer program products. Therefore, the present invention can be shown in the form of full-hardware embodiments, full-software embodiments or embodiments in combination of software and hardware. In addition, the present invention can be in the form of a computer program product implemented on one or more computer-usable storage media (including but not limited to magnetic disk memories and optical memories and the like) containing computer-usable program codes.

The present invention has been described according to the flowcharts and/or block diagrams of the methods, apparatuses (systems) and computer program products of the embodiments of the present invention. It should be understood that each flow and/or block in the flowchart and/or block diagram and a combination of the flows and/or blocks in the flowchart and/or block diagram can be achieved by computer program instructions. These computer program instructions can be provided to general-purpose computers, special-purpose computers, embedded processors and other processors of programmable data processing apparatuses to generate a machine, so that a device configured to achieve functions specified in one or more flows in the flowchart and /or one or more blocks in the block diagram can be produced by instructions executed by computers or other programmable data processing apparatuses.

These computer program instructions can also be stored in a computer-readable memory which can guide computers and other programmable data processing apparatuses to operate in a specific way, so that an article of manufacture including an instruction device can be produced by instructions stored in the computer-readable memory. The instruction device achieves functions specified in one more flows in the flowchart and/or one or more blocks in the block diagram.

These computer program instructions can also be loaded onto computers or other programmable data processing apparatuses, so that a series of operating steps are executed on the computers or other programmable apparatuses to generate a computer-implemented process. In this way, steps for achieving functions specified in one or more flows in the flowchart and/or one or more blocks in the block diagram can be provided by instructions executed on the computers or other programmable apparatuses.

Apparently, a person skilled in the art can make various alternations and variations to the present invention without departing from the spirit and scope of the present invention. In this way, if these alternations and variations of the present invention are within the scope of the claims of the present invention and the equivalences thereof, the present invention is intended to include these alternations and variations.

## Claims

1. A method for switching an operating state of a robot, comprising the following steps of:
providing an excitation device for an opening terminal and an excitation device for a closing terminal on a mask of the robot;
transmitting, by the excitation device, a mask state signal to a slave computer processor when the mask is opened or closed;
by the slave computer processor, processing the received mask state signal and then transmitting the processed mask state signal to a master computer processor; and
controlling, by the master computer processor, the switchover of the operating state of the robot according to the received processed mask state signal.

2. A method for switching an operating state of a robot according to claim 1, **characterized in that**
when the mask is opened, a low level is generated by triggering the excitation device for the opening terminal and transmitted to the slave computer processor;
the slave computer processor feeds back a signal to the master computer processor; and
the master computer processor receives the signal, and controls the robot to enter a touch-based operating state.

3. A method for switching an operating state of a robot according to claim 1, **characterized in that**
when the mask is closed, a low level is generated by triggering the excitation device for the closing terminal and transmitted to the slave computer processor;
the slave computer processor feeds back a signal to the master computer processor; and
the master computer processor receives the signal, and controls the robot enter an independent operating state.

4. A method for switching an operating state of a robot according to claim 1, **characterized in that**, by the slave computer processor, processing the received mask state signal and then transmitting the processed mask state signal to a master computer processor further comprises the following steps of:
performing, by the slave computer processor, filtering and de-noising upon receiving the mask state signal; and
transmitting, by the slave computer processor, the processed mask state signal to the master computer processor by serial communication.

5. A method for switching an operating state of a robot according to claim 1, further comprising the following steps of:
generating a high level by triggering the excitation device for the opening terminal or the excitation device for the closing terminal, , and transmitting the high level to the slave computer processor, when the mask is in a half-open and half-closed state;
transmitting, by the slave computer processor, the received signal to the master computer processor; and
by the master computer processor, receiving the signal, determining that an opening fault occurs in the mask, and giving a warning.

6. A method for switching an operating state of a robot according to claim 1, **characterized in that** the excitation device comprises a micro switch, a Hall switch or an infrared reflecting switch.

7. A method for switching an operating state of a robot according to claim 2, **characterized in that**, when the robot is in a touch-based operating state, the master computer processor feeds back a voice prompt indicating that the mask has been opened, starts the control to a master computer touch screen, activate a proximal touch operation of the master computer touch screen, turns on and controls a purifier by the master computer touch screen, turns on and controls household appliances by the master computer touch screen, turns on and controls a projector by the master computer touch screen, and starts a video chat by a camera in the master computer.

8. A method for switching an operating state of a robot according to claim 3, **characterized in that**, when the robot is in an independent operating state, the master computer processor feeds back a voice prompt indicating that the mask has been closed, and starts terminal control, turns on remote control, monitoring and/or voice control, controls the motion of the robot by a phone APP, controls a purifier by the mobile APP, controls household appliances by the mobile APP, performs monitoring by the mobile APP, controls the motion of the robot by voice, starts a chat with the robot by voice, shows various facial expressions of the robot by a touch screen, and matches the various facial expressions with body actions.

9. A system for switching an operating state of a robot, comprising a mask, an excitation device for an opening terminal, an excitation device for a closing terminal, a master computer processor and a slave computer processor, wherein
the mask is configured to trigger the excitation device for the opening terminal or the excitation terminal for the closing terminal to generate a low level;
the excitation device for the opening terminal is configured to generate a low level, when the mask has been opened, and transmit the low level to the slave computer processor;
the excitation device for the closing terminal is configured to generate a low level, when the mask has been closed, and transmit the low level to the slave computer processor;
the slave computer processor is configured to receive the low level generated by the excitation device for the opening terminal or the excitation device for the closing terminal, and perform filtering and de-noising, transmit the low level to the master computer processor; and
the master computer processor is configured to control the switchover of the operating state of the robot according to the low level generated by the excitation device for the opening terminal or the excitation device for the closing terminal.

10. The method for switching an operating state of a robot according to claim 9, **characterized in that** the excitation device for the opening terminal or the excitation device for the closing terminal comprises a micro switch, a Hall switch or an infrared reflecting switch.
